Europäisches Patentamt

European Patent Office

Office européen des brevets

(11) Veröffentlichungsnummer: **0 072 510**
A2

(12) # EUROPÄISCHE PATENTANMELDUNG

(21) Anmeldenummer: 82107114.9

(22) Anmeldetag: 06.08.82

(51) Int. Cl.³: **C 03 B 35/10**
**C 03 B 35/04**

(30) Priorität: 19.08.81 DE 3132739

(43) Veröffentlichungstag der Anmeldung:
23.02.83 Patentblatt 83/8

(84) Benannte Vertragsstaaten:
AT CH FR GB IT LI SE

(71) Anmelder: Raddon, Peter
Neue Heimat 17
D-6483 Bad Soden-Salmünster 3(DE)

(72) Erfinder:
Der Erfinder hat auf seine Nennung verzichtet

(74) Vertreter: Neubauer, Hans-Jürgen, Dipl.-Phys.
Fauststrasse 30
D-8070 Ingolstadt(DE)

(54) Glasformmaschine mit einem Schwenkantrieb für einen Ausschieber.

(57) Es wird eine Glasformmaschine mit einem Schwenkantrieb geschaffen, wobei der Schwenkantrieb an einem Ausschieber (97) angebracht ist, der geformte Glasgegenstände (101) von einer Abstellplatte (102) auf ein Transportband (122) überschiebt. Es wird vorgeschlagen, die Schwenkbewegung mit Hilfe eines durch ein Druckmittel betätigbaren Drehantriebs (59) auszuführen. In einer bevorzugten Ausführungsform werden dem Drehantrieb (59) zwei Behälter (60, 61) mit Hydraulikflüssigkeit (62) vorgeschaltet, die mit Druckluft beaufschlagbar sind. Die Druckluft wird durch zwei Ventile (74, 75) gesteuert. Das eine Ventil (74) ist von einer zentralen Steuereinheit ansteuerbar, während das andere Ventil (78) mechanisch durch einen die Stellung des Drehantriebs (59) wiedergebenden Stellungsgeber (112, 113) betätigt wird. Mit Hilfe eines Drosselventils (65) in einer Hydraulikflüssigkeits-Leitung vom Drehantrieb (59) zu einem der Behälter (60, 61) kann die Schwenkgeschwindigkeit eingestellt werden. Insgesamt ergibt sich durch die Verwendung des druckmittelbetriebenen Drehantriebs (59) ein weitgehend hitzeunempfindlicher robuster Schwenkantrieb, der vielseitig verwendbar ist, eine ruhige und ruckfreie Drehbewegung durch die Vermeidung von Gelenken und Rutsch- oder Einrastkupplungen gewährleistet, der bei einer Glasformmaschine mit mehreren Stationen nicht zwangsgesteuert wird, der einfach zu justieren ist und der in der gezeigten Ausführung einfach zu montieren und zu wechseln ist.

./...

EP 0 072 510 A2

FIG. 5

## Glasformmaschine mit einem Schwenkantrieb für einen Ausschieber

Die Erfindung betrifft eine Glasformmaschine mit einem Schwenkantrieb für einen Ausschieber gemäß dem Oberbegriff des Anspruchs 1.

Bei bekannten Glasformmaschinen dieser Art werden die geformten, heißen Glasgegenstände zur Abkühlung auf eine Abstellplatte an der Glasformmaschine gestellt. Nach einer kurzen Zeit der Abkühlung wird der Glasgegenstand mit Hilfe eines Ausschiebers auf ein an der Abstellplatte vorbeilaufendes Transportband geschoben und zur weiteren Verarbeitung abtransportiert. Normalerweise sind Glasformmaschinen aus mehreren hintereinanderliegenden Stationen aufgebaut, in denen jeweils Glasgegenstände geformt werden und denen jeweils eine Abstellplatte zugeordnet ist. Hier läuft das Transportband an einer der Anzahl der Stationen entsprechenden Zahl von Abstellplatten vorbei, von denen aus mit je einem Ausschieber die Glasgegenstände in möglichst gleichen Abständen auf das Transportband geschoben werden. Zur Steuerung dieses Vorgangs ist es bekannt, eine von einer Hauptantriebswelle angetriebenen Abstreiferwelle zu verwenden, die an allen Stationen entlangläuft und zur Steuerung und zum Antrieb der Ausschieber Steuernocken oder Steuerscheiben trägt. Diese Art der Ausschieberbetätigung hat im wesentlichen zwei Nachteile. Der eine ist der, daß bei einer Störung an einer Station durch die zwangsweise Koppelung des Antriebs und der Steuerung für alle Ausschieber die gesamte Maschine mit allen ihren Stationen abgestellt werden muß. Auch bei einem nur kurzzeitigen Abstellen der Maschine ergeben sich bereits erhebliche Produktionsausfälle und zudem nach dem Wiederanlauf Temperaturprobleme, die bis zur Wiederausbildung von stationären Temperaturbedingungen zu schlechten Fertigungsergebnissen und Ausschußware führen können. Der zweite wesentliche Nachteil ist der, daß zur Einstellung oder Nachjustierung der Steuerung die gesamte Maschine stillgesetzt werden muß.

Zur Vermeidung dieser Nachteile bietet sich die Auflösung der Zwangssteuerung und des gemeinsamen Antriebs für alle Ausschieber durch eine Entkoppelung und Zuordnung eines eigenen steuerbaren Antriebs für jeden Ausschieber an. Aus dem DE-GM 77 32 081 ist es bekannt, dazu einen steuerbaren Elektromotor als Antrieb zu benutzen. Eine vertikale Welle, an deren Oberseite der Ausschieber angebracht ist, ist über eine Überlastkupplung durch eine Kurbel in Verbindung mit einer Schwinge mit der Welle des Elektromotors verbunden. Bei einer Umdrehung des Elektromotors in immer die gleiche Richtung vollführt dann die Ausschieber-Welle eine Hin- und Herbewegung um 90°.

Der Einsatz eines Elektromotors bringt hier in vielerlei Hinsicht Nachteile. Der Elektromotor muß zur Überwindung der Hebelkräfte und der Reibungen in den leicht verschmutzenden und damit schwergängigen Gelenken ein relativ hohes Drehmoment aufweisen. Zum Schutz der Anlage als auch zum Schutz des Elektromotors ist daher eine Überlastkupplung zwischen Elektromotor und der Ausschieber-Welle erforderlich. Elektromotoren sind zudem meist nur bedingt für den Einsatz bei hohen Temperaturen, wie sie an einer Glasformmaschine in der Nähe der Abstellplatten auftreten, geeignet. Zur Einstellung der Schwenkbewegung sind die vorhandenen Hebel gegeneinander zu justieren, das erscheint an der hier gezeigten Stelle unter dem Transportband und den Abstellplatten nur sehr schwierig möglich zu sein. Ein Elektromotor, der unter den hier gegebenen rauhen Umgebungsbedingungen gut arbeiten soll, muß sehr hochwertig ausgeführt sein und ist damit teuer. Ein weiteres Problem bringt die Unterbringung eines doch relativ großen Elektromotors bei den beengten Platzverhältnissen unter dem Ausschieber. Ein Elektromotor der hier erforderlichen Ausführung wird zusätzlich zu der Schwachstrom-Steuerleitung einen Starkstromanschluß benötigen. Die Leitungsführung einer Starkstromleitung am Montagebereich erfordert bei den dort auftretenden Temperaturen einen zusätzlichen Aufwand. Zusätzlich zu dem Starkstromanschluß für den Elektromotor ist aber für den Schwenkantrieb noch ein Pneumatikanschluß erforderlich. Der Ausschieber ist nämlich auch hier wie üblich als pneumatisch gesteuerte Kolben-Zylinder-Einheit ausgeführt. Bei der Schwenkbewegung des Ausschiebers wird hier durch die Freigabe von Ventilöffnungen der Kolben mit einem daran angebrachten Überschiebefinger in Richtung auf die auf der Abstellplatte stehenden Glasteile ausgeschoben. Bei dem bekannten Schwenkantrieb sind somit zum Antrieb zwei Energiearten, pneumatische und elektrische Energie, mit den erforderlichen Anschlüssen und Zuleitungen eingesetzt, was aufwendig ist. In den Fertigungsbetrieben ist in der Regel nur ein Betriebselektriker ermächtigt, an Starkstromanschlüssen zu hantieren. Das kann, wenn ein Betriebselektriker nicht erreichbar ist, zu erheblichen Verzögerungen bei der Auswechslung eines Schwenkantriebs im Störfall führen. Zusammenfassend wird festgestellt, daß ein Elektromotor aufwendig zu montieren ist und Anlaß zu wiederholten Betriebsstörungen sein kann.

Aufgabe der Erfindung ist es demgegenüber, eine Glasformmaschine mit einem Schwenkantrieb für einen Ausschieber zu schaffen, bei der der Schwenkantrieb insgesamt preiswert, funktionssicher und gut für den Einsatz in der rauhen Umgebung an der Glasformmaschine geeignet ist.

Diese Aufgabe wird mit den kennzeichnenden Merkmalen des Anspruchs 1 gelöst.

Gemäß Anspruch 1 soll die Schieberwelle mit einem durch ein Druckmittel betätigbaren Drehantrieb bewegungsübertragend verbunden sein. Da für die Betätigung der Zylinder-Kolben-Einheit am Ausschieber ohnehin Druckluft erforderlich ist, kann diese hier vorteilhaft auch zur Betätigung des Drehantriebs eingesetzt werden. Daher braucht nur ein Energieträger an den Schwenkantrieb herangeführt werden. Die Rohre für die Druckluft sind zudem, im Gegensatz zu isolierten, elektrischen Leitungen, hitzeunempfindlich und können daher beliebig an oder durch die Maschine an den Schwenkantrieb herangeführt werden. Auch der Drehantrieb selbst ist nahezu hitzeunempfindlich, da in ihm keine Isolierungen und Wicklungen enthalten sind. Da der Drehantrieb ohne Überlastungsgefahr gegen beliebige Anschläge gefahren werden kann, braucht er nicht durch eine Überlastsicherung geschützt werden. Der Drehantrieb kann ganz gekapselt ausgeführt sein, so daß er auch unter den herrschenden rauhen Betriebsbedingungen praktisch verschleißfrei und störungssicher arbeitet. Da die Steuerung des Schwenkantriebs entweder ebenfalls pneumatisch erfolgen kann oder zur Steuerung nur ein Schwachstromsignal notwendig ist, kann jede Bedienperson einen Schwenkantrieb schnell und ohne Hilfe eines Betriebselektrikers wechseln. Dies trägt wesentlich zur Verkürzung eines Maschinenstillstands und zur Behebung einer Störung durch einen Schwenkantrieb bei, insbesondere wenn Schichtbetrieb gefahren wird und ein Betriebselektriker außerhalb der Normalschicht nicht zur Verfügung steht. Bei entsprechender Auslegung und Drosselung der Druckmittelleitungen ergibt sich eine ruhige und ruckfreie Drehbewegung.

Gemäß Anspruch 2 wird die Antriebswelle des Drehantriebs direkt koaxial mit der Schieberwelle verbunden. Damit wird ein sehr einfacher und kompakter Aufbau erzielt. Hebel, Kurbeln und ähnliche Verbindungselemente, die durch verschmutzende und schwergängige Gelenkverbindungen Anlaß zu Störungen und zu Unsicherheiten in der Justierung geben können, entfallen. Durch den Wegfall von Übertragungsgliedern kann mit relativ geringem Drehmoment gefahren werden, was eine Überlastkupplung in jedem Fall entbehrlich macht. Der Drehantrieb wird hier einfach von der einen oder anderen Seite mit dem Druckmittel beaufschlagt und macht dabei zwischen zwei Anschlägen die gewünschte Schwenkbewegung von 90°. Wie weiter unten gezeigt wird, ist bei dem hier beanspruchten Aufbau eine sehr einfache Justierung dieser Anschläge und damit des Ausschiebers möglich, da der Stellung der Anschläge unmittelbar die Stellung des Ausschiebers zugeordnet ist.

Nach Anspruch 3 sollen den beiden Kammern des Drehantriebs Flüssigkeitsvorlagen vorgeschaltet sein, die mit Druckluft beaufschlagt werden und einen zwischen den Kammern des Drehantriebs angeordneten Leitflügel hin- und herschieben und dadurch die Schwenkbewegung bewirken. Durch die Verwendung einer Flüssigkeitsvorlage in Verbindung mit einer Pneumatiksteuerung wird die Drehbewegung sehr gleichmäßig, ruckfrei und ruhig. Wie weiter unten gezeigt wird, besteht hier zusätzlich die Möglichkeit, sehr einfach die Geschwindigkeit der Schwenkbewegung zu beeinflussen. Durch die Flüssigkeit, normalerweise Hydrauliköl, im Drehantrieb wird dieser zugleich geschmiert und verschleißfrei gehalten. Es könnte auch ein Drehantrieb mit nur einer Kammer und je einem Anschluß links und rechts eines schwenkbaren Leitflügels verwendet werden. Weiter könnte ein federbelasteter Drehantrieb eingesetzt werden, der in einer Richtung durch Druckbeaufschlagung schwenkbar ist und in der anderen Richtung durch eine Feder rückgeholt wird. Bei diesem Drehantrieb wäre nur ein Behälter mit einer Flüssigkeitsvorlage erforderlich.

Gemäß Anspruch 4 soll in einer Leitung von einem Behälter mit Flüssigkeitsvorlage zu dem Drehantrieb ein verstellbares Drosselventil angebracht sein. Bei einer Querschnittsverminderung und damit stärkeren Drosselung der Leitung wird die Schwenkbewegung des Ausschiebers langsamer. Das Drosselventil, vorzugsweise ein Nadelventil, soll im Bedienbereich der Bedienpersonen für die Glasformmaschine angebracht sein, d. h. die Leitung wird verlängert und aus dem Bereich der Abstellplatte, des Ausschiebers und des Förderbands vor die Maschine herausgeführt und dort das Drosselventil angebracht. Dadurch wird eine sehr einfache Möglichkeit der Nachjustierung der Steuerung bei einer Glasformmaschine mit mehreren Stationen geschaffen. Die Steuerung wird hier vorzugsweise, wie weiter unten noch eingehender dargestellt, durch einen Impuls bewirkt, wobei der Anfang des Impulses den Ausschiebevorgang und das Ende des Impulses den Rückschwenkvorgang einleitet. Wenn nun der Glasgegenstand aus einer Station zu früh ausgeschoben wird, d. h. der Abstand zum vorhergehenden Glasgegenstand auf dem Transportband zu gering ist, kann durch das Drosselventil einfach die Ausschiebegeschwindigkeit verringert werden, so daß der Glasgegenstand später auf das Transportband geschoben wird. Es braucht also hier nicht in die Hauptsteuerung, die den Anfang des Steuerimpulses festlegt, eingegriffen werden, was nur von einem entsprechenden Fachmann durchgeführt werden kann. Vorteilhaft können kleinere Nachjustierungen hier von den Bedienpersonen ohne Kenntnisse in der Steuerungs- oder Regelungstechnik direkt vor Ort durchgeführt werden. Bei einer auch denkbaren elektrischen Nachsteuerungsmöglichkeit der aufgezeigten Art müßten Potentiometer oder Schleifwiderstände verwendet werden, die sehr hitzeempfindlich bezüglich ihrer Konstanz und Funktionssicherheit sind und die sich hier nur sehr wenig eignen. Zudem müßten elektrische Leitungen von einem Potentiometer zu der normalerweise weitab von der Glasformmaschine angebrachten elektrischen Steuereinheit geführt werden.

Mit den Merkmalen des Anspruchs 5 soll der Verlust von Hydraulikflüssigkeit aus den Behältern für die Flüssigkeitsvorlage weitgehend verhindert werden. Es hat sich gezeigt, daß ohne diese Maßnahmen die Hydraulikflüssigkeit so schnell aus den Behältern entweicht, daß ein praktischer Einsatz kaum möglich ist. Durch einen Schwimmer, der nahezu die gesamte Oberfläche der Hydraulikflüssigkeit abdeckt, wird weitgehend vermieden, daß beim Einströmen der Druckluft Flüssigkeitspartikel aus der Oberfläche gelöst werden und beim Entlüften des Behälters in der Form von Öldampf ins Freie entweichen. Ein weiterer Schutz dagegen ist ein Ölabscheider, durch den die Druckluft einströmen bzw. bei Entlüftung des Behälters ausströmen muß. Dadurch wird die Hydraulikflüssigkeit weitgehend am Entweichen gehindert und eine Geruchsbelästigung durch ausströmende Dämpfe im Bereich des Schwenkantriebs vermieden.

Gemäß Anspruch 6 ist der Ölabscheider mit Kammern und Gängen versehen, deren Bodenflächen schräg nach unten verlaufen, so daß Hydraulikflüssigkeit, die sich während der Wartezeit, in der der Drehantrieb unbetätigt ist, hier niederschlägt, in den Behälterinnenraum zurücktropfen kann.

Ein weiteres Problem, das sich beim praktischen Einsatz gezeigt hat, besteht darin, daß durch den Drehantrieb hindurch, durch die Leitflügeldichtung hindurch, Hydraulikflüssigkeit von einem Behälter in den anderen als Schleichöl gedrückt wird. Dadurch entleert sich bereits nach kurzer Zeit ein Behälter und der andere Behälter läuft mit Hydraulikflüssigkeit voll bzw. über. Eine Lösung dieses Problems ist gemäß Anspruch 7 durch eine direkte Verbindung der beiden Behälter über eine Niveauausgleichseinrichtung möglich.

Gemäß Anspruch 8 soll diese Niveauausgleichseinrichtung aus einem Ausgleichsventil bestehen, bei dem zwischen zwei Ventilsitzen eine im unbelasteten Zustand in ihrer Mittellage durch Federn gehaltene Ventilkugel angeordnet ist. Bei einer Druckbeaufschlagung einer Behälterflüssigkeit weicht die Ventilkugel an einen Ventilsitz aus und sperrt damit die direkte Verbindung zwischen den beiden Behältern, so daß die Flüssigkeit durch die Leitung zum Drehantrieb gedrückt wird und dort die Schwenkbewegung bewirkt. Nach dem Ausschiebevorgang und nach Beendigung des Schwenkvorgangs, wenn der Ausschieber seine Warteposition einnimmt, werden beide Behälter entlüftet. Dadurch nimmt die Ventilkugel ihre Mittelposition ein und gibt die direkte Leitung zwischen den beiden Behältern frei, so daß ein Ausgleich des Flüssigkeitsniveaus stattfindet.

Gemäß Anspruch 9 soll ein Drehantrieb verwendet werden, dessen interne Anschläge für den oder die Leitflügel in einem Abstand größer als 90° angebracht sind. Im Handel erhältlich sind Drehantriebe mit einer Drehbewegung von 100°. Da ein Drehantrieb an beliebige, auch extern angebrachte Anschläge gefahren werden kann, ohne daß eine Überlastung möglich ist, werden extern Anschläge im Abstand der gewünschten Schwenkbewegung von 90° angeordnet. Diese Anschläge müssen dabei innerhalb der möglichen

Drehbewegung von 100° des Drehantriebs angebracht sein. Damit kann der Schwenkantrieb, d. h. die Stellung des Ausschiebers in seiner Warteposition und die dazu um 90° versetzte Stellung beim Ausschiebevorgang über dem Transportband nur durch die Verstellung der externen Anschläge innerhalb des maximalen Schwenkbereichs von 100° justiert werden. Dazu braucht der Drehantrieb nicht von der Schieberwelle gelöst werden.

In Anspruch 10 ist eine bevorzugte Ausführung einer solchen Verstelleinrichtung angegeben. Die externen Anschläge sind hier durch eine Aussparung von 90° in einem ersten Zahnrad gebildet. In dieser Aussparung bewegt sich ein mit der Welle des Drehantriebs verbundener Steuerfinger, der sich in seinen Extremstellungen an die Seiten der Aussparung anlegt. Dieses erste Zahnrad kann mit Hilfe eines zweiten Zahnrades gegenüber dem Drehantrieb verstellt werden. Das zweite Zahnrad trägt eine Welle, die von der Unterseite des Schwenkantriebs nach oben verlängert und damit gut zugänglich ist. Dadurch wird eine sehr einfache Möglichkeit einer mechanischen Justierung des Schwenkantriebs erreicht, ohne daß in die Steuerung eingegriffen werden muß.

Mit einer Ventilsteuerung gemäß Anspruch 11 braucht nur ein Steuerimpuls für den Schwenkantrieb zur Verfügung gestellt werden. Dieser Steuerimpuls wirkt direkt auf ein erstes Steuerventil und darüber auf den ersten Behälter. Die Pneumatiksteuerung für den zweiten Behälter ist von der Stellung des Ausschiebers abgeleitet und wird von einem zweiten, mechanisch von einem Stellungsgeber betätigten Steuerventil durchgeführt. Damit braucht für die Steuerung, wie bereits oben ausgeführt, nur ein Impuls bestimmter Länge zur Verfügung gestellt werden, wobei auch der Anfang und die Länge des Impulses weitgehend unkritisch sind, sofern ein Drosselventil gemäß Anspruch 4 verwendet wird. Durch die zusätzlich in Anspruch 9 und Anspruch 10 angegebene Möglichkeit der Justierung des Schwenkantriebs können alle erforderlichen Nachjustierarbeiten von angelernten Kräften ohne Eingriff in elektrische Steuerelemente direkt vor Ort und während des Betriebes der Glasformmaschine durchgeführt werden.

Das zweite Steuerventil wird gemäß Anspruch 12 zweckmäßig so angeordnet, daß es bei einer Verstellung der beiden externen Anschläge mitverstellt wird und dadurch mit seiner mechanischen Betätigung einer Extremstellung des Ausschiebers zugeordnet ist. Hier kann vorteilhaft der Steuerfinger als Stellungsgeber des Ausschiebers verwendet werden und das zweite Steuerventil in der Warteposition des Ausschiebers betätigen.

Für eine schnelle Montage und insbesondere für ein schnelles Wechseln eines kompletten Schwenkantriebs sollen, gemäß Anspruch 13, alle Teile des Schwenkantriebs auf einer Grundplatte montiert und alle Versorgungsanschlüsse auf Stecker oder Adapter geführt sein. Bei der Demontage werden dann die Druckluftleitungen und die zum Drosselventil führenden Hydraulikleitungen abgesperrt und ein Stecker für den elektrischen Steuerungsanschluß gezogen. Dann wird der Adapter getrennt, die Grundplatte abgeschraubt und der Schwenkantrieb insgesamt entnommen. Die erneute Montage, beispielsweise eines Reserve-Schwenkantriebs, erfolgt schnell und einfach, auch durch angelerntes Personal, in umgekehrter Reihenfolge.

Die Erfindung wird anhand eines Ausführungsbeispieles mit weiteren Einzelheiten, Merkmalen und Vorteilen beschrieben.

Es zeigen

Fig. 1 schematisch eine Draufsicht auf eine Glasformmaschine mit mehreren Stationen,

Fig. 2 schematisch einen Schnitt durch einen Drehantrieb,

Fig. 3 einen Schnitt durch einen Ölabscheider,

Fig. 4 ein Prinzipschaltbild der pneumatisch-hydraulischen Steuerung,

Fig. 5 einen Schnitt durch einen Schwenkantrieb mit
schematisch eingezeichneter Steuerung,

Fig. 6 eine Ansicht von unten auf den Schwenkantrieb.

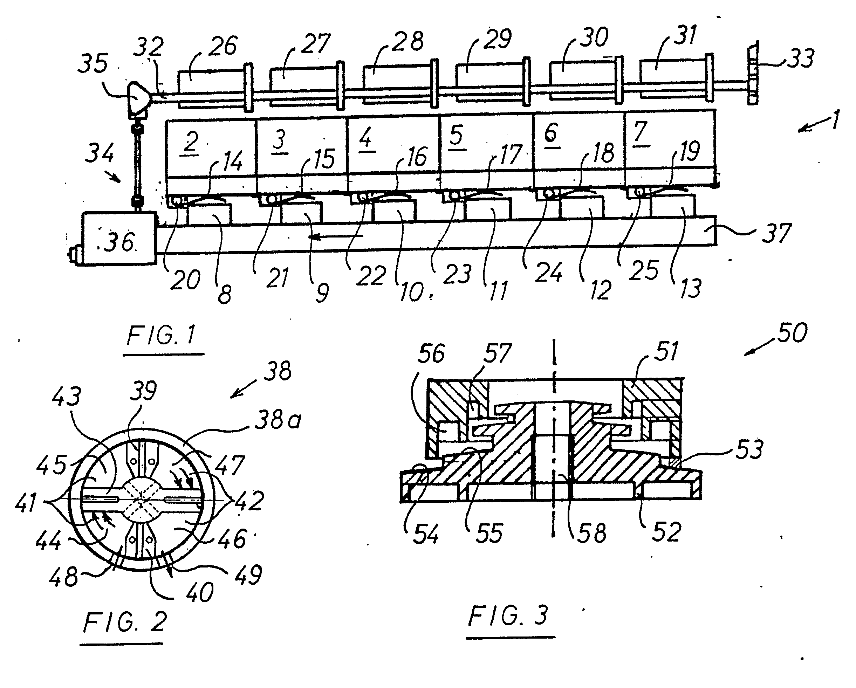

In Fig. 1 ist eine Glasformmaschine 1 mit sechs Stationen 2, 3, 4, 5, 6, 7 dargestellt. Jeder Station 2 bis 7
ist eine Abstellplatte 8 bis 13, ein Ausschieber 14 bis
19, ein Schwenkantrieb 20 bis 25 für jeden Ausschieber
14 bis 19 und ein Schalttrommelgetriebe 26 bis 31 zugeordnet. Eine Hauptantriebswelle 32 ist von einer Antriebskette 33 angetrieben und treibt ihrerseits die Schalttrommelgetriebe 26 bis 31. An der linken Seite der Hauptantriebswelle 32 sitzt der Förderbandantrieb 34, bestehend aus einem Umlenkgetriebe 35 und einem weiteren Getriebe 36, mit dem die Geschwindigkeit des Transportbandes verändert werden kann. Vor den Abstellplatten 8 bis
13 führt ein Transportband 37 mit einer Bewegung zur
linken Seite vorbei.

Wenn die Glasformmaschine 1 arbeitet, werden in jeder
Station 2 bis 7 Glasgegenstände geformt und von einem
Greifer nach dem Formvorgang auf die zugeordnete Abstellplatte 8 bis 13 abgestellt. Beispielsweise soll in der
Station 2 ein Glasgegenstand auf die Abstellplatte 8 gestellt worden sein. Nach einer kurzen Zeit der Abkühlung wird dann der Schwenkantrieb 20 von einem Impuls,
der aus der Stellung des Schalttrommelgetriebes abgeleitet wird, aktiviert. Der Schwenkantrieb 20 und der
hier bügelförmig gestaltete Ausschieber 14 vollführen
dann eine Schwenkbewegung um 90° über der Abstellplatte 8
zum Transportband 37. Dadurch wird ein auf der Abstellplatte 8 stehender Glasgegenstand auf das Förderband 37
geschoben und durch dessen Bewegung nach links vom Ausschieber 14 in die Förderrichtung entfernt. Der Ausschieber 14 wird dann, noch bevor ein auf dem Transportband
nachfolgender Glasgegenstand in seinen Schwenkbereich gelangt, wieder in seine gezeichnete Warteposition durch
den Schwenkantrieb 20 zurückbewegt. Die Steuerung der
einzelnen Stationen 2 bis 7 und der entsprechenden
Schwenkantriebe 20 bis 25 wird hier von den Schalttrommelgetrieben 26 bis 31 abgeleitet. Eine Steuerung könnte
jedoch auch durch eine freiprogrammierbare elektrische
Steuerung erfolgen.

In Fig. 2 ist ein Schnitt durch einen pneumatisch oder
hydraulisch betreibbaren Drehantrieb 38 dargestellt, wie
er in dem gezeigten Ausführungsbeispiel verwendet wird.
Ein Zylinder 38a wird von zwei sich gegenüberstehenden
Anschlägen 39, 40 in zwei Kammern 41, 42 geteilt. Ein
Leitflügel 43 ist in der Mitte des Zylinders drehbar gelagert und teilt die Kammer 41 in zwei Kammerhälften 44,
45 und die Kammer 42 in zwei Kammerhälften 46, 47. Neben
dem Anschlag 40 sind Anschlußöffnungen 48, 49 für das
Druckmittel angeordnet. Die Anschläge 39, 40 haben zur
Mitte hin angeschrägte Flächen, so daß auch dann, wenn
der Leitflügel 43 an einer Seite der Anschläge anliegt,
die Anschlußöffnungen 48, 49 durch den Leitflügel 43
nicht verdeckt werden. Wenn die Anschlußöffnung 48 mit
Druck beaufschlagt wird, das heißt beispielsweise Hydraulikflüssigkeit entsprechend dem eingezeichneten Pfeil in
die Kammer 44 einströmt, wird der Leitflügel 43 im Uhrzeigersinn bewegt und durch die Anschlußöffnung 49 Hydraulikflüssigkeit aus der Kammer 46 verdrängt. Die Bewegung findet so lange statt, bis sich der Leitflügel 43 an die Anschläge 39, 40 anlegt. Bei einer gewünschten Bewegung in die andere Richtung wird die Anschlußöffnung 49 mit Druck beaufschlagt und die Hydraulikflüssigkeit, aus der dann drucklos gemachten Kammerhälfte 44 verdrängt. Der gezeichnete Drehantrieb 38 ist für eine Schwenkbewegung von $100^o$ ausgelegt.

In Fig. 3 ist ein Ölabscheider 50 dargestellt, wie er in den weiter unten beschriebenen Behältern für Hydraulikflüssigkeit verwendet wird. Der Ölabscheider 50 besteht aus einem oberen Teil 51 und einem unteren Teil 52, die an am Umfang verteilten Schweißpunkten 53 verbunden sind. Das untere Teil 52 ist terrassenförmig, sich nach oben verjüngend ausgebildet, wobei die gebildeten Stufen eine schräg nach außen abfallende Oberfläche 54, 55 aufweisen. Das obere Teil 51 ist mit Vorsprüngen stark gegliedert und über das untere Teil 52 gestülpt, so daß Ringkammern 56, 57 entstehen. Der Ölabscheider 50 trägt in der Mitte eine Gewindebohrung 58, damit er am Behälter befestigt werden kann. Die Gewindebohrung 58 ist somit nach dem Einbau verschlossen. Wenn der Hydraulikbehälter belüftet wird, muß daher die Druckluft, in der Hydraulikflüssigkeit-Dampf enthalten sein kann, durch die Ringkammern 56, 57 nach oben hin abströmen. Es hat sich gezeigt, daß in den Ringkammern 56, 57 die Hydraulikflüssigkeit zum Großteil ausfällt und sich an den schrägen Oberflächen 54, 55 niederschlägt. Durch die Anschrägung dieser Oberflächen 54, 55 läuft die Hydraulikflüssigkeit wieder zurück und tropft in den Behälter ab.

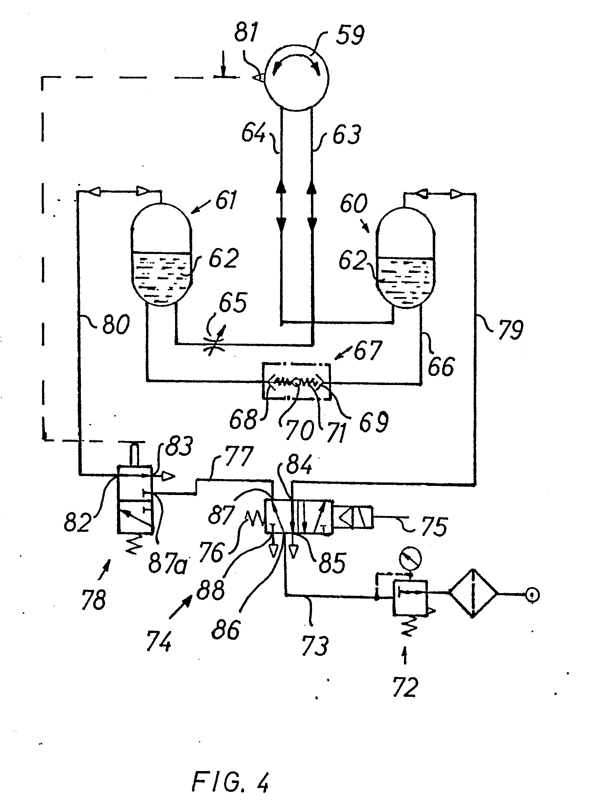

In Fig. 4 ist das Prinzipschaltbild des erfindungsgemäßen Schwenkantriebs dargestellt. Einem Drehantrieb 59 sind zwei Behälter 60, 61 vorgeschaltet, die ca. zur Hälfte mit Hydrauliköl 62 gefüllt sind und die über Leitungen 63, 64 mit dem Drehantrieb 59 verbunden sind. In der Leitung 63 ist ein Drosselventil 65 angeordnet. Weiter sind die beiden Behälter 60, 61 über eine Leitung 66 verbunden, in der ein Ausgleichsventil 67 liegt. Das Ausgleichsventil 67 besteht aus zwei Ventilsitzen 68, 69 zwischen denen eine Ventilkugel 70 durch eine Feder 71 in unbelastetem Zustand gehalten ist. Von einer Druckkonstanthaltungseinrichtung 72 führt eine Leitung 73, in der Druckluft mit konstantem Druck ansteht, zu einem Steuerventil 74. Das Steuerventil 74 ist elektrisch über eine Impulsleitung 75 ansteuerbar. Die Impulsleitung 75 könnte aber auch eine pneumatische Impulsleitung sein. Durch eine Feder 76 ist das Steuerventil 74 rücksetzbar. Vom Steuerventil 74 ausgehend führt eine Leitung 77 zu einem zweiten, mechanisch betätigbaren Steuerventil 78 und eine weitere Leitung 79 zum Behälter 60. Das zweite Steuerventil 78 ist mit dem Behälter 61 durch eine Leitung 80 verbunden. Das Steuerventil 78 wird mechanisch durch einen mit dem Drehantrieb 59 verbundenen Stellungsgeber 81 betätigt.

In der gezeichneten Stellung des Schwenkantriebs ist der Ausschieber in seiner vorher beschriebenen Wartestellung. Dabei ist das Steuerventil 78 durch den Stellungsgeber 81 betätigt, die Anschlüsse 82, 83 des Steuerventils 78 verbunden und damit der Behälter 61 drucklos und entlüftet. Auch der Behälter 60 ist entlüftet, da am Steuerventil 74 dessen Anschlüsse 84, 85 verbunden sind. Wenn nun an der Impulsleitung 75 ein Impuls angelegt ist, werden die Anschlüsse 86 und 84 und zugleich die Anschlüsse 87 und 88 am Steuerventil 74 verbunden. Dadurch gelangt Druckluft aus der Leitung 73 über Anschluß 86 und 84 und die Leitung 79 in den Behälter 60. Das in dem Behälter 60 befindliche Hydrauliköl 62 drückt in den Drehantrieb 59 und veranlaßt diesen zu einer Schwenkung im Uhrzeigersinn. Bereits nach einer nur geringen Schwenkbewegung wird durch die Entfernung des Stellungsgebers 81 vom Steuerventil 78 das Steuerventil 78 seinen unbetätigten Zustand einnehmen. Dadurch wird der Anschluß 82 mit dem Anschluß 87a des Steuerventils 78 verbunden. Da jedoch gleichzeitig am Steuerventil 74 die Anschlüsse 87 und 88 Verbindung haben, wird der Behälter 61 über die Leitung 80, das Steuerventil 78, die Leitung 77 und durch das Steuerventil 74 entlüftet. Dadurch kann, wie vorher beschrieben, aus der zweiten Kammer des Drehantriebs 59 Hydrauliköl in den belüfteten Behälter 61 geschoben werden, so daß die Schwenkbewegung durch einen sich sonst im Behälter 61 aufbauenden Druck nicht behindert wird. Nachdem die Schwenkbewegung um 90° mit dem Drehantrieb 59 ausgeführt wurde, verschwindet der Impuls auf der Impulsleitung 65 wieder. Das Steuerventil 74 geht dadurch wieder in seine ursprünglich gezeichnete Stellung zurück. Die Druckleitung 73 ist dabei über das Steuerventil 74 und die Leitung 77 mit dem Anschluß 87a des Steuerventils 78 verbunden. Da das Steuerventil 78 durch den um 90° verdrehten Stellungsgeber 81 noch nicht betätigt ist, ist der Anschluß 87a mit Anschluß 82 verbunden, so daß Druckluft über die Leitung 80 zum Behälter 61 gelangt. Dadurch wird der Drehantrieb bei zugleich belüftetem Behälter 60 in seine Ausgangslage zurückbewegt. Unmittelbar vor dem Erreichen der Ausgangslage wird das Steuerventil 78 durch den Stellungsgeber 81 betätigt, so daß in dieser Stellung das Steuerventil 78 seine gezeichnete Stellung einnimmt und der Behälter 61 ebenfalls entlüftet wird.

Wenn beide Behälter 60, 61 belüftet sind, nimmt das Ausgleichsventil 67 die gezeichnete Stellung ein, so daß über die dann freigegebene Leitung 66 ein Niveauausgleich zwischen den Behältern 60 und 61 stattfinden kann. Wenn der Behälter 60 mit Druck beaufschlagt wird, bewegt sich die Ventilkugel 70 gegen den Anschlag 68 und schließt das Ausgleichsventil 67 und entsprechend bewegt sich die Ventilkugel 70 auf den Ventilsitz 69, wenn der Behälter 61 mit Druck beaufschlagt ist. Das bedeutet, daß immer dann, wenn einer der Behälter 60, 61 mit Druck beaufschlagt ist, das Ausgleichsventil 67 geschlossen ist, so daß der aufgewandte Druck zur Schwenkbewegung des Drehantriebs 59 verwendet wird. Nur in der Stellung, wenn beide Behälter 60, 61 entlüftet sind, ist dessen direkte Verbindung freigegeben und der Niveauausgleich, der ein Vollaufen oder Entleeren eines Behälters 60, 61 durch im Drehantrieb 59 durchströmendes Schleichöl verhindern soll, findet statt. Mit Hilfe des verstellbaren Drosselventils 65 kann die Geschwindigkeit der Hydraulikölverschiebung von einem Behälter 60, 61 zum anderen und damit die Geschwindigkeit der Schwenkbewegung des Drehantriebs 59 bei gleichem anstehenden pneumatischen Druck in der Leitung 73 verändert werden.

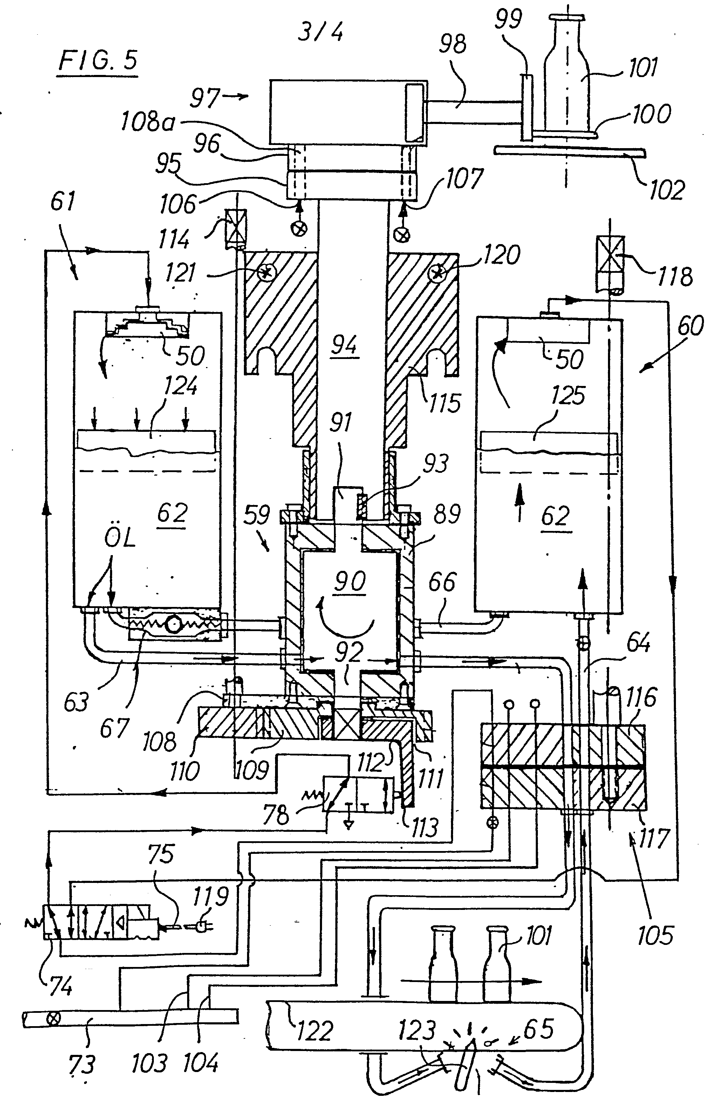

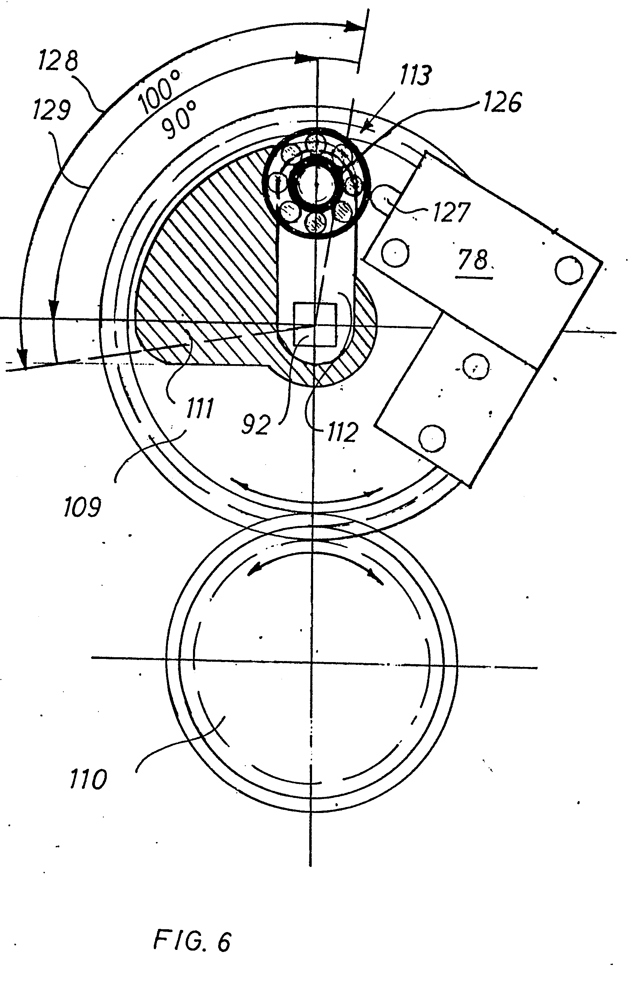

In Fig. 5 ist eine konkrete Ausführungsform gemäß dem Prinzipschaltbild von Fig. 4 dargestellt. Für die mit dem Prinzipschaltbild in Fig. 4 gleichen Teile und Leitungen werden die gleichen Bezugszeichen auch in Fig. 5 verwendet. Ein Drehantrieb 59 ist durch Leitungen 63 und 64 mit Behältern 60 und 61, die ca. zur Hälfte mit Hydrauliköl 62 gefüllt sind, verbunden. Eine direkte Verbindung zwischen den Behältern 60, 61 besteht durch die Leitung 66, in der ein Ausgleichsventil 67 angeordnet ist. Der Drehantrieb 59 besteht aus einem Gehäuse 89 und einem drehbaren Leitflügel 90 im Inneren des Gehäuses, der über ein oberes Wellenende 91 und ein unteres Wellenende 92, die beide aus dem Gehäuse 89 ragen, gelagert ist. Das obere Wellenende 91 ist über eine Nut- und Federverbindung 93 an einer darüber sitzenden, schwenkbaren Ausschieber-Welle bewegungsübertragend befestigt. Die Ausschieber-Welle 94 ist in einer Platte 95 gelagert, auf der sie mit einem Flansch 96 dichtend und beweglich aufsitzt. Auf dem Flansch 96 ist eine Zylinder-Kolben-Einheit 97 angebracht, deren Kolbenstange 98 ausfahrbar ist und am vorderen Ende eine vertikale Platte 99 und einen Ausschieberfinger 100 trägt. Im ausgefahrenen Zustand der Kolbenstange 98 liegt die Platte 99 und der Ausschieberfinger 100 an einem Glasgegenstand, beispielsweise einer Flasche 101, der von einer Abstellplatte 102 weggeschoben wird, an. Die Hin- und Herbewegung der Kolbenstange 98 wird durch Druckluft bewirkt, die über Leitungen 103, 104 von einer Leitung 73, in der Druckluft mit konstantem Druck ansteht, über einen Adapter 105 zu Anschlüssen 106, 107 an der Platte 95 geführt ist. Die Leitungen 103, 104 sind in der Fig. 5 nicht bis zu den Anschlüssen 106, 107 durchgezeichnet sondern der Übersichtlichkeit halber unterbrochen gezeichnet. Von den Anschlüssen 106,107 führen Bohrungen durch die Platte 95. Im gezeichneten Zustand kommt eine Bohrung 108a im drehbeweglichen Flansch 96 mit der linken Bohrung in der Platte 95 zur Deckung, so daß Druckluft hinter den Kolben der Zylinder-Kolben-Einheit 97 geführt wird und der Kolben mit der Kolbenstange 98 nach rechts ausgefahren wird. Nach einer Drehung, beispielsweise in die endgültige Warteposition, kommt eine weitere Bohrung im Flansch 96 mit der rechten Bohrung in der Platte 95 zur Deckung, so daß Druckluft rechts vor den Kolben geleitet wird, wobei die linke Seite des Zylinders entlüftet ist. Dadurch wird die Kolbenstange 98 nach links zurückbewegt. Die Hin- und Herbewegung der Kolbenstange 98 ist somit durch die Schwenkbewegung des Drehantriebs 59 und der Ausschieber-Welle 94 zwangsgesteuert und benötigt außer den Druckluftanschlüssen bei 106 und 107 keine weiteren Steuerglieder. Im Bereich des unteren Wellenendes 92 des Drehantriebs 59 ist am Gehäuse 89 eine Trägerplatte 108 angebracht. Auf der Trägerplatte 108 ist ein erstes Zahnrad 109 und ein zweites Zahnrad 110 drehbeweglich gelagert. Das erste Zahnrad 109 enthält eine Aussparung 111, die die 90°-Anschläge bildet, und in die ein Steuerfinger 112 eingreift. Der Steuerfinger 112 trägt einen Fortsatz 113, der das mechanisch betätigbare Steuerventil 78 betätigt. Die Funktion der Zahnräder 109, 110, der Aussparung 111, des Steuerfingers 112 und des Fortsatzes 113 werden in Verbindung mit der Draufsicht in Fig. 6 näher beschrieben. Insgesamt bilden diese Elemente jedoch eine Verstellvorrichtung, die mit Hilfe der Stellwelle 114, die vom zweiten Zahnrad 110 ausgehend nach oben führt, betätigt wird. Die Stellwelle 114, die unterbrochen gezeichnet ist, dient dazu, die Verstelleinrichtung leicht zugänglich zu machen.

Alle Teile des Schwenkantriebs sind auf einer Montageplatte 115 angebracht. Die Zuleitungen sind auf den Adapter 105 geführt, der aus einem oberen Teil 116 und einem unteren Teil 117 besteht. Ober- und Unterteil 116, 117 sind dicht mit Hilfe einer weit nach oben in den Bedienbereich geführten Schraube 118 verschraubt. Bei der Demontage des Schwenkantriebs werden die Leitungen mit den eingezeichneten Ventilen abgesperrt, ein Stecker 119 an der Steuerleitung 75 des Steuerventils 74 gelöst und die Schraube 118 aufgeschraubt. Durch weiteres Lösen von zwei Befestigungsschrauben 120, 121 an der Montageplatte 115 kann der gesamte Schwenkantrieb, an dem auch die Steuerventile 74, 78 befestigt sind, schnell ausgetauscht werden. Die Leitung 64, in der das Drosselventil 65 angeordnet ist, ist ebenfalls über den Adapter 105 geführt, da das Drosselventil 65 vor die Glasformmaschine im Bereich eines Transportbandes 122 angebracht sein soll. Auf dem Transportband 122 sind zwei Flaschen 101 dargestellt, die von der Abstellplatte 102, die in der Fig. 5 rechts oben dargestellt ist, auf das Transportband 122 ausgeschoben worden sind. Mit Hilfe eines Handgriffs 123 am Drosselventil 65 kann, wie bereits beschrieben, die Geschwindigkeit der Schwenkbewegung des Drehantriebs 59 verändert werden. In den Behältern 60, 61 ist je eine Schwimmerscheibe 124, 125 eingebracht, die verhindern soll, daß beim Einströmen von Druckluft in die Behälter 60, 61 aus der Oberfläche des Hydrauliköls Flüssigkeitsteilchen ausgelöst werden.

Die in Fig. 5 eingezeichnete Steuerung entspricht der in Fig. 4 beschriebenen. Die eingezeichneten Teile deuten die Strömung der Druckluft bzw. des Hydrauliköls an, wie sie sich beim Zurückschwenken des Ausschiebers in die Warteposition ergibt. Das Steuerventil 78 ist in der Position gezeichnet, die sich unmittelbar vor der Betätigung durch den zurückschwingenden Stellungsgeber 81, der hier von dem Steuerfinger 112 und dem Fortsatz 113 gebildet ist, ergibt.

Fig. 6 zeigt eine Draufsicht von unten auf die Zahnräder 109, 110. Das erste größere Zahnrad 109 ist auf einer hier nicht dargestellten Trägerplatte 108 gegenüber dem Drehantrieb 59 koaxial und drehbeweglich gelagert. In einer Aussparung 111, die einen Winkelausschnitt von $90^{\circ}$ bildet, ist ein Steuerfinger 112 angebracht, der mit dem unteren Wellenende 92 des Drehantriebs 59 über einen Vierkant verbunden ist. Ein aus der Zeichenebene hervorspringender Fortsatz 113 ist hier als Rad 126 ausgebildet. Das zweite, mechanisch betätigbare Steuerventil 78 ist auf dem Zahnrad 109 befestigt und wird beim Anliegen bzw. Eindrücken eines Steuerzapfens 127 durch das Rad 126 betätigt. Im Eingriff mit dem Zahnrad 109 steht ein zweites Zahnrad 110, dessen Stellwelle 114 nach oben in den Bedienbereich geführt wurde (Fig. 5). Durch Verdrehen des Zahnrads 110 wird auch das Zahnrad 109 und damit die $90^{\circ}$-Aussparung 111 verdreht. Die Aussparung 111 bildet mit ihren Seitenteilen die Anschläge für den Steuerfinger 112 und damit auch die Anschläge für den Drehantrieb 59. Das bedeutet, daß der Drehantrieb 59 nicht die möglichen $100^{\circ}$ Drehbewegung, die ihm von seinen internen Anschlägen 39, 40 (Fig. 2) zur Verfügung stehen, ausführt, sondern in seiner Bewegung durch die Anschläge der $90^{\circ}$- Aussparung 111 auf $90^{\circ}$ Schwenkbewegung begrenzt ist. Die mögliche Drehbewegung von $100^{\circ}$, die durch die Montage des Drehantriebs 59 festgelegt ist, ist in Fig. 6 durch einen Pfeil 128 dargestellt. Die Drehbewegung von $90^{\circ}$, die der

Drehantrieb tatsächlich ausführen kann, ist durch einen Pfeil 129 bezeichnet. Zu Justier- und Einstellzwecken kann nun der 90°-Bereich, der durch den Pfeil 129 dargestellt ist, innerhalb des durch den Pfeil 128 dargestellten 100°-Bereichs verdreht werden. Dies gibt eine einfache Einstell- und Nachjustiermöglichkeit innerhalb eines relativ weiten Bereiches, ohne daß in die eigentliche Steuerung eingegriffen werden muß. Durch die Montage des Steuerventils 78 auf dem Zahnrad 109 wird bei einer Verstellung der Anschläge die Zuordnung des Stellungsgebers 81, hier des Steuerfingers 112 und des Fortsatzes 113, zu dem Steuerzapfen 127 nicht verändert, so daß hier keine Nachjustierung erforderlich ist.

Zusammenfassend ist festzustellen, daß hier eine Ausschieber-Vorrichtung geschaffen wurde, welche glashüttengerecht konstruiert, stationsweise vielseitig einsetzbar und justierbar ist, keine Zwangssteuerung zwischen den einzelnen Stationen erfordert, einfach und schnell vom normalen Maschinenbedienungspersonal ab- und anmontiert werden kann und die eine ruhige und ruckfreie Drehbewegung des Ausschiebevorgangs durch Vermeidung von Gelenken, Rutsch- und Einrastkupplungen ermöglicht.

Patentansprüche

1. Glasformmaschine mit einem Schwenkantrieb für einen
Ausschieber, mit wenigstens einer Abstellplatte zum
Abstellen zur Abkühlung von geformten Glasgegenständen, mit einem an der Abstellplatte vorbeiführenden
Transportband, wobei mit dem Ausschieber durch eine
Schwenkbewegung die Glasgegenstände von der Abstellplatte auf das Transportband schiebbar sind und der
Ausschieber an einer vertikal stehenden Schieberwelle angeordnet ist, dadurch gekennzeichnet, daß
die Schieberwelle (94) mit einem durch ein Druckmittel (62) betätigbaren Drehantrieb (38; 59), mit
dem Schwenkbewegungen durchführbar sind, bewegungsübertragend verbunden ist.

2. Glasformmaschine nach Anspruch 1, dadurch gekennzeichnet, daß der Drehantrieb (38; 59) eine Antriebswelle (91, 92) enthält, die koaxial zur Schieberwelle
(94) angeordnet und mit dieser bewegungsübertragend
verbunden ist.

3. Glasformmaschine nach Anspruch 1 oder 2, dadurch gekennzeichnet, daß der Drehantrieb(38; 59) zwei mit Druckmittel beaufschlagbare Kammern (41, 42) für Links- und Rechtsbewegung aufweist, die Kammern (41, 42) mit je einem teilweise mit Hydraulikflüssigkeit (62) gefüllten Behälter (60, 61) verbunden sind und die Behälter (60, 61) in einem Bereich oberhalb des Flüssigkeitsstandes der Hydraulikflüssigkeit (62) an je eine steuerbare Druckluftleitung (79, 80) angeschlossen sind.

4. Glasformmaschine nach Anspruch 3, dadurch gekennzeichnet, daß in einer Leitung (63) zwischen einer Kammer (41, 42) des Drehantriebs (38; 59) und einem Behälter (60, 61) ein verstellbares Drosselventil (65) angebracht ist.

5. Glasformmaschine nach einem der Ansprüche 1 bis 4, dadurch gekennzeichnet, daß die Behälter (60, 61) zylindrisch ausgeführt sind, in die Behälter (60, 61) die Zylindergrundfläche nahezu überdeckende Schwimmer (124, 125) eingebracht sind und die Behälter (60, 61) mit den Druckluftleitungen (79, 80) über Hydraulikflüssigkeit (62) zurück in die Behälter (60, 61) abscheidende Ölabscheider (50) verbunden sind.

6. Glasformmaschine nach Anspruch 5, dadurch gekennzeichnet, daß der Ölabscheider (50) Kammern und Gänge (56, 57) mit schräg nach unten in den Behälterraum weisenden Bodenflächen (54, 55) aufweist, von denen niedergeschlagene Hydraulikflüssigkeit in den Behälter (60, 61) zurücktropfbar ist.

7. Glasformmaschine nach einem der Ansprüche 1 bis 6, dadurch gekennzeichnet, daß die Behälter (60, 61) im Bereich der Hydraulikflüssigkeit (62) über eine Niveauausgleichseinrichtung (67) verbunden sind.

8. Glasformmaschine nach Anspruch 7, dadurch gekennzeichnet, daß die Niveauausgleichseinrichtung ein Ausgleichsventil (67) mit einer zwischen zwei Ventilsitzen (68, 69) federbelasteten Ventilkugel (70) ist.

9. Glasformmaschine nach einem der Ansprüche 1 bis 8, dadurch gekennzeichnet, daß ein Drehantrieb (38; 59) mit internen Anschlägen (39, 40) für eine Drehbewegung größer als 90° verwendet wird und außerhalb des Drehantriebs (38; 59) auf einem Anschlagträger (109) angebrachte, gemeinsam innerhalb des Winkelbereichs der internen Anschläge (39, 40) verstellbare Anschläge (Aussparung 111) im Abstand von 90° angeordnet sind.

10. Glasformmaschine nach Anspruch 9, dadurch gekennzeichnet, daß der Anschlagträger (109) ein gegenüber dem Drehantrieb (38; 59) verdrehbares erstes Zahnrad (109) mit einer 90°-Aussparung (111), in die ein mit der Welle (92) des Drehantriebs (38; 59) verbundener Steuerfinger (112, 113) eingreift, ist, und daß ein zweites am ersten Zahnrad (109) eingreifendes Zahnrad (110) mit einer in Reichweite einer Bedienperson führenden Stellwelle (114) zur Verstellung des ersten Zahnrads (109) betätigbar ist.

11. Glasformmaschine nach einem der Ansprüche 1 bis 10, dadurch gekennzeichnet, daß die Druckluftleitungen (79, 80) zu den Behältern (60, 61) je mit einem ersten und zweiten Steuerventil (74, 78) verbunden sind und das erste Steuerventil (74) mit einer Druckluftquelle (72, 73) verbunden und von einer die gesamte Maschine koordinierenden Steuereinheit (75) ansteuerbar ist, wobei der eine Behälter (60) mit Druckluft beaufschlagbar oder entlüftbar ist und das zweite Steuerventil (78) dem ersten Steuerventil (74)

nachgeschaltet und mechanisch mit Hilfe eines die Stellung des Ausschiebers (14 bis 19; 97) anzeigenden Stellungsgebers (81; 112, 113) betätigbar ist, wobei der zweite Behälter (61) mit Druckluft beaufschlagbar oder entlüftbar ist.

12. Glasformmaschine nach einem der Ansprüche 1 bis 11, dadurch gekennzeichnet, daß das zweite Steuerventil (78) auf dem ersten Zahnrad (109) angeordnet ist und der Stellungsgeber (81). der mit der Welle (92) des Drehantriebs (38; 59) verbundene Steuerfinger (112, 113) ist.

13. Glasformmaschine nach einem der Ansprüche 1 bis 12, dadurch gekennzeichnet, daß alle Teile des Schwenkantriebs auf einer Montageplatte (115) montiert sind und alle Versorgungsanschlüsse absperrbar auf Stecker oder Adapter (105) geführt sind.

FIG. 1

FIG. 2

FIG. 3

FIG. 4

FIG. 5

0072510

FIG. 6